# EUROPEAN PATENT SPECIFICATION

(11) **EP 2 633 646 B1**
(45) Date of publication and mention of the grant of the patent: **27.11.2019**
(21) Application number: 10859056.3
(22) Date of filing: 26.10.2010
(51) Int. Cl.: H04L 29/06, H04L 12/26, H04L 12/24

(54) **METHODS AND SYSTEMS FOR DETECTING SUSPECTED DATA LEAKAGE USING TRAFFIC SAMPLES**
VERFAHREN UND SYSTEME FÜR DEN NACHWEIS DES VERDACHTES AUF DATENVERLUST ANHAND VON VERKEHRSBEISPIELEN
PROCÉDÉS ET SYSTÈMES DE DÉTECTION DE FUITE DE DONNÉES SUSPECTÉE À L'AIDE D'ÉCHANTILLONS DE TRAFIC

(43) Date of publication of application: 04.09.2013
(73) Proprietor: Hewlett Packard Enterprise Development LP, Houston, TX 77070 (US)
(72) Inventor: HALL, Matthew Richard Thomas, Mountain View, California 94040 (US); KOORNSTRA, Reinoud Jelmer Jeroen, Roseville, California 95747 (US)
(74) Representative: Haseltine Lake Kempner LLP
(86) International application number: PCT/US2010/054131
(87) International publication number: WO 2012/057737

(56) References cited:
- US-A1- 2005 055 399
- US-A1- 2005 210 533
- US-A1- 2008 148 346
- US-A1- 2008 148 346
- US-A1- 2009 064 326
- US-A1- 2009 064 326
- US-A1- 2009 241 173
- US-A1- 2010 212 010
- ISOBE T: "LARGE-THROUGHPUT ANOMALY PREVENTION MECHANISM IMPLEMENTED IN DYNAMIC RECONFIGURABLE PROCESSOR", IEICE TRANSACTIONS ON COMMUNICATIONS, COMMUNICATIONS SOCIETY, TOKYO, JP, vol. E89B, no. 9, 1 September 2006 (2006-09-01), pages 2440-2447, XP001501561, ISSN: 0916-8516, DOI: 10.1093/IETCOM/E89-B.9.2440
- JOHN W ET AL: "Passive internet measurement: Overview and guidelines based on experiences", COMPUTER COMMUNICATIONS, ELSEVIER SCIENCE PUBLISHERS BV, AMSTERDAM, NL, vol. 33, no. 5, 15 March 2010 (2010-03-15) , pages 533-550, XP026877374, ISSN: 0140-3664 [retrieved on 2009-11-06]

## Description

### I. BACKGROUND

Confidential and other forms of sensitive information may be identified, monitored, and protected through the use of data loss prevention (DLP) solutions. These solutions, also known as data leakage prevention solutions, apply to data that is in motion (e.g., e-mail, instant messages, file transport protocol messages), in use (e.g., CD, DVD, USB drive) or at rest (e.g., databases, files, web sites).

Many DLP solutions are implemented in Intrusion Prevention Systems (IPS) or intrusion detection systems (IDS), which are typically deployed at a border of a network, such as a firewall, or behind a firewall. This may leave open significant vulnerabilities for unencrypted sensitive information traveling inside of the network.
US2009/0064326 assigned to GTB Technologies describes a network data protection method in which all outgoing data passes through a security device. 'Large-Throughput Anomaly Prevention Mechanism Implemented in Dynamic Reconfigurable Processor' describes an anomaly prevention mechanism (an anomaly being, for example, an intrusion to a computer network by a hacker) using a dynamically reconfigurable processor. US2008/0148346 in the name of Gill et al, describes methods for obtaining and processing network data to detect violation of a compliance policy. US 2005/0210533 to Copeland et al proposes a method of analyzing flow statistics to determine if the flow appears to be legitimate traffic or possible suspicious activity. "Passive internet measurement: Overview and guidelines based on experiences" by John et al provides a discussion of some challenges of Internet traffic monitoring.

The object of the present invention is solved by a method having the features of claim 1 and by a system having the features of claim 8. Advantageous embodiments thereof are defined in the respective dependent claims.

### II. BRIEF DESCRIPTION OF THE DRAWINGS

The present disclosure may be better understood and its numerous features and advantages made apparent to those skilled in the art by referencing the accompanying drawings.
**FIG. 1** is topological block diagram of a network system in accordance with an embodiment of the invention.
**FIG. 2** is a process flow diagram for detection of suspected data loss using traffic samples in accordance with an embodiment of the invention
**FIG. 3** is a process flow diagram for processing traffic samples in accordance with an embodiment of the invention.
**FIG. 4** illustrates a computer system in which an embodiment of the present invention may be implemented.

### III. DETAILED DESCRIPTION OF THE INVENTION

Packet sampling may be used to monitor network traffic. In general, flow-based traffic monitoring systems include a sampling agent which resides on a networked device and which forwards to data collectors information about the network traffic going through the device. As used herein, a networked device is a network infrastructure device, host, printer, server, and other computing systems interconnected in a network that is configured to generated traffic samples. Various network management protocols may be implemented that enable the sampled traffic data to be gathered. Examples of the network management protocol may include, but are not limited to, sFlow (described in RFC 3176), NetFlow, and Internet Protocol Flow Information Export (IPFIX). As used herein, sampled traffic data is a sample of a packet constituting network traffic through the networked device, and the sample includes payload data from the packet constituting network traffic. Sampled traffic data may include statistical packet-based sampling of switched flows (e.g., flow samplers) and may also include time-based sampling of network interface statistics (e.g., counter polling). As used herein, a flow is defined as all packets that are received on one interface, enter the switching/routing module, and are sent out on another interface.

The framework for sampled traffic data may be leveraged for detection of suspected data loss in a network. The potential for data loss may occur as soon as a packet containing unencrypted sensitive data enters a network, whether it is a private or public network. As used herein, unencrypted data is decrypted data (e.g., encrypted then decrypted) and not encrypted data. Not encrypted data includes plain text such as packets sent using Hypertext Transfer Protocol (HTTP), Simple Mail Transferred Protocol (SMTP), Simple Network Management Protocol (SNMP) version 1 and 2, Telnet, and the like.

Methods and systems for detecting suspected data leakage in a network that includes a plurality of networked devices is described herein. A packet is received from a networked device of the plurality of networked devices. It is determined that the packet includes sampled traffic data. The sampled traffic data includes a sample of a packet constituting network traffic through the networked device, and the sample includes payload data from the packet constituting network traffic. The payload data of the sampled traffic data is analyzed. It is determined whether sensitive data is detected in the payload data of the sampled traffic data.

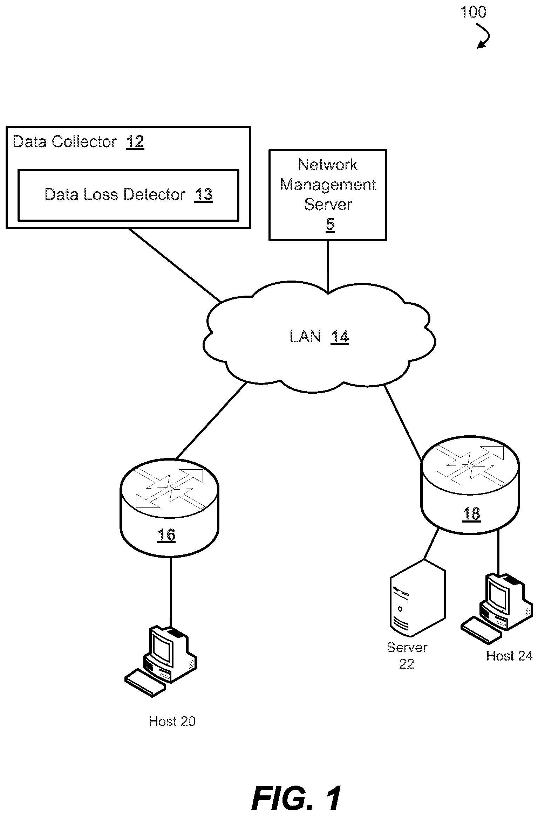

**FIG. 1** is topological block diagram of a network system 100 in accordance with an embodiment of the invention. System 100 includes a data collector 12, a network management server 5, a local area network (LAN) 14, a network device 16, a network device 18, a host 20, a server 22, and a host 24.

Data collector 12 is coupled to LAN 14 and is configured to receive sampled traffic datagrams from one or more sampling agents, and analyze sampled traffic datagrams. In another embodiment, data collector 12 is integrated into another device in network 100, such as network management server 100. The connection between data collector 12 and LAN 14 may include multiple network segments, transmission technologies and components.

Data collector 12 includes a data loss detector 13, which is configured to decode and analyze sampled traffic datagrams and detect sensitive data in the sampled traffic datagrams of multiple data sources and/or sampling instances of various network devices or hosts. In another embodiment, data loss detector 13 is a standalone device and is coupled to data collector 12 or is integrated into another device in network 100, such as network management server 5.

As used herein, a data source is a location within a network device or host device that can make traffic measurements. For example, data sources include interfaces, virtual interfaces, physical entities (e.g., backplane, VLANs, antennas, Ethernet connections) within the network device, and other data sources. Each data source may have access to a subset of the network traffic flowing through the device. In one embodiment, a data source is defined for each physical interface on the device, ensuring that every packet transiting the network device is observed. As used herein a sampling agent instance is a process that samples 1:N packets of the traffic going through a data source. The sampling agent instance may send the header contents and all or a part of the sampled packet payload in the form of sampled traffic data to data collector 12. There may be one or more sampling agent instances associated with a single data source. Each sampling agent instance operates independently from other instances.

Data loss detector 13 decodes the sampled traffic data and processes the sampled packet payload, which is contained in the sampled traffic data. The sampled packet payload is analyzed for sensitive data. As used herein, sensitive data may include personally identifiable information (e.g., name, address, phone number, social security number, date of birth, an email address, logon information, a password, a national identification number, etc.), financial data (e.g., payment card industry information, credit card information, authorization codes, personal identification numbers associated with financial cards, customer and employee personal identifiable information, bank account information, financial statements, billing information, etc.), personal health information (e.g., patient name, patient identifier, diagnostic and procedural codes, insurance information, medical billing information, etc.), a software key, and other data relevant under Payment Card Industry Data Security Standard (PCI DSS), Health Insurance Portability and Accountability Act (HIPAA), Family Educational Rights and Privacy Act (FERPA), Gramm-Leach-Bliley Act (GLBA), Sarbanes-Oxlet Act (SOX), and other privacy standards.

Network management server 5 is configured to plan, deploy, manage, and/or monitor a network, such as network 100. Furthermore, network management server 5 is configured to generate one or more configurations including configurations for flow samplers and counter pollers, and to configure networked devices for flow sampling, specifying, for example, the size of flow samplers, etc. Network management server 5 may also be configured to receive sampled traffic datagrams from one or more sampling agents, and analyze traffic sampled traffic datagrams.

Network management server 5 is operatively coupled to network device 16 and network device 18 via LAN 14. The connection between network management server 5 and network devices 16 and 18 may include multiple network segments, transmission technologies, and components.

LAN 14 is implemented by multiple network infrastructure devices, such as network switches, and/or other network devices, such as a bridge. LAN 14 may be a LAN, LAN segments implemented by a router, an Ethernet switch or an array of switches having multiple ports. LAN 14 may be comprised of multiple subnets, including various virtual LANs (VLANs).

Network devices 16-18 are operatively coupled to network management server 5 via LAN 14. The connection between network devices 16-18 and LAN 14 may include multiple network segments, transmission technologies and components. Network device 16 is operatively coupled to host 20. The connection between network device 16 and host 20 may include multiple network segments, transmission technologies and components. Network device 18 is operatively coupled to server 22 and host 24. The connection between network device 18 and server 22, and network device 18 and host 24 may include multiple network segments, transmission technologies and components.

Network devices 16-18 are networked devices configured to receive and forward network packets and forward sampled traffic datagrams, for example, according to a sampling configuration. Network devices may include network equipment, such as a switch or router. Network devices 16-18 may be a group of devices, such as wireless access points, that are controlled by a central device, such as a wireless controller. In another embodiment, network devices 16-18 may be located in a remote network.

Each of network devices 16-18 includes a sampling agent. In general, a sampling agent is embedded within a network device and is configured to provide an interface for configuring sampling instances within the network device. Sampling configurations may be associated with a network management protocol and/or sampling standard, such as, but not limited to sFlow, Netflow, or etc. Each of these standards yield sample traffic data in a specified format that may differ from one standard to another. Sampling agents are configured to use two forms of sampling: statistical packet-based sampling of network traffic (e.g., flow samplers) and time-based sampling of network interface statistics (e.g., counter pollers). For example, the sampling agents sample 1 in N packets, where N can be set by the manufacturer or configured by a user (e.g., a network administrator). The particular sampling protocol employed in network devices may depend upon the make or model of the network device. For example, switches may employ the sFlow standard. Sampling agents may be centrally configured through network management server 5 and/or data collector 12. This configuration can be command line based configuration and/or Simple Network Management Protocol (SNMP) based configuration. In other embodiments, sampling agents may be embedded in host devices, such as host devices 16-18, or in a stand-alone probe.

Sampling agents are configured to generate sampled traffic data and provide the sampled traffic data to data collector 12. The sampled traffic data may be packets comprised of datagrams or other units of data that include traffic information (e.g., flow samplers, counter pollers, etc.) obtained from network packets. Taking a sample involves, in part, extracting portions from the network packet and including those portions in the sampled traffic data. Sampling agents may access the unencrypted raw data in the payload of the network packet, and the payload data or portions thereof are added to a sampled traffic datagram as flow samplers.

Encrypted data may be sampled, but is not decodable, for example by the data loss detector 13. In particular, where there is encrypted data, various headers (e.g., Ethernet, IP, and UDP or TCP header) may still be sampled even though they are not decoded. For example, where the Internet Protocol Security (IPsec) protocol is being used, the Ethernet and IP headers may be sampled.

In one embodiment, host 20, host 24, and/or server 22 are networked devices and configured to receive network packets and forward sampled traffic datagrams, for example, according to a sampling configuration. Furthermore, host 20, host 24, and/or server 22 may include sampling agents configured to generate sampled traffic datagrams and provide the sampled traffic datagrams to data collector 12.

In operation, network packets flow throughout network 100, during which time, sampling agents build sampled traffic datagrams. Based on the configuration, one out of N packets forwarded by a network managed device, such as network device 16, is sampled. For each network packet that is to be sampled, a sampling agent builds a sampled traffic datagram by copying unencrypted payload data from the network packet into the sampled traffic datagram. Sampled traffic datagrams may then be sent, from the network managed device in which the sample agent is embedded, to a traffic sample collector, such as data collector 12. Data collector 12 may forward or otherwise provide the sampled traffic datagrams to data loss detector 13 for further analysis. The configuration may be set by network management server 5 for those networked devices that are under the purview and control of the network management server 5, or by other entities, such as an administrator through direct access to the networked device.

Data loss detector 13, analyzes the sampled traffic datagrams and determines if sensitive data is detected therein. In response to detecting sensitive data, remedial action may be taken, for example to protect the sensitive data from further dissemination.

The present invention can also be applied in other network topologies and environments. Network 100 may be any type of network familiar to those skilled in the art that can support data communications using any of a variety of commercially-available protocols, including without limitation TCP/IP, SNA, IPX, AppleTalk, and the like. Merely by way of example, network 100 can be a local area network (LAN), such as an Ethernet network, a Token-Ring network and/or the like; a wide-area network; a virtual network, including without limitation a virtual private network (VPN); the Internet; an intranet; an extranet; a public switched telephone network (PSTN); an infra-red network; a wireless network (e.g., a network operating under any of the IEEE 802.11 suite of protocols, the Bluetooth protocol known in the art, and/or any other wireless protocol); and/or any combination of these and/or other networks.

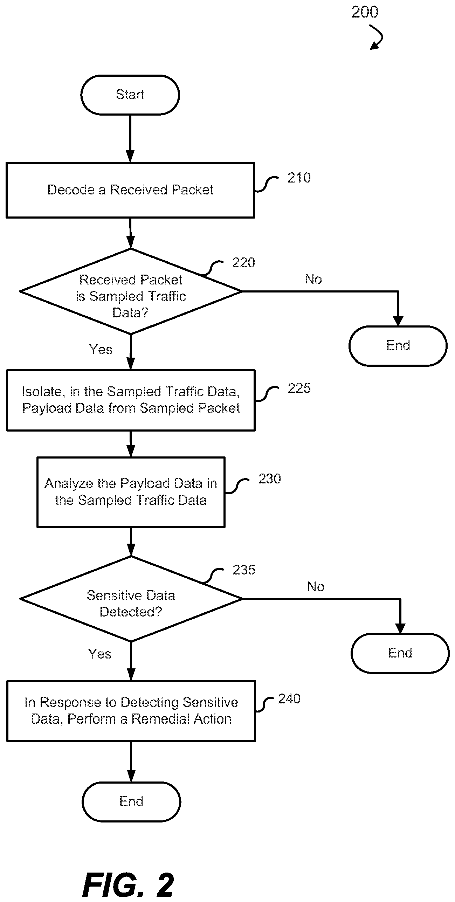

**FIG. 2** is a process flow diagram 200 for detection of suspected data loss using traffic samples in accordance with an embodiment of the invention. The depicted process flow 200 may be carried out by execution of one or more sequences of executable instructions. In another embodiment, the process flow 200 is carried out by components of a data loss detector, an arrangement of hardware logic, e.g., an Application-Specific Integrated Circuit (ASIC), etc.

In one embodiment, a device capable of sampling (e.g., sFlow-capable device) randomly samples network packets at a predetermined sampling rate that has been set, for example by a network management server or by a device manufacturer. Sampling agents on the sampling-capable devices generate sampled traffic data and provide the sampled traffic data to a data collector. In one embodiment, the sampling agents employ the sFlow version 5.0 standard, as published by the sFlow organization and recognized by the Internet Engineering Task Force as RFC-3176.

In one example, the sampled traffic data is received as a UDP packet to a specified host and port on the data collector. The default port is 6343. The UDP payload contains a sFlow datagram. Each datagram provides information about the sFlow version, an IP address of the originating agent, a sequence number, how many samples are contained, and typically up to ten flow samples, per the sFlow standard described in RFC 3176. The flow samples are comprised of unencrypted payload data from the sampled packet. The number of bytes that are sampled from the network packet is fully configurable according to the sFlow standard. Typically, 128 bytes are sampled as a default, but this can be adjusted to capture more or less. In one example, of the 128 sampled bytes, 14 bytes are the Ethernet header, 20 bytes are from the IP header, and 20 bytes are from the TCP header, leaving 74 bytes from the payload of the network packet. When the network packet is a UDP packet (rather than a TCP packet), 86 bytes of the 128 sampled bytes are from the payload of the network packet.

In one embodiment, various sampling agents provide sampled traffic data in the form of packets to, for example, a data collector and/or a data loss detector. At step 210, a received packet is decoded. In decoding, a format is applied to the data, making it readable for further processing. Typically, raw flow samplers are encoded using a variety of standard text formats, including but not limited to US-ASCII, ISO 8859-1, Unicode UTF-8, etc. Character set decoding may be performed upon the received packet using one or more standard text formats, or other formats appropriate to the area in which the network operates, where the source device is located, etc.

At step 220, it is determined whether the received packet is sampled traffic data. After decoding, the headers of the packet are examined, and if it is determined that the packet is sampled traffic data, processing continues to step 225. Otherwise, if the received packet is not sampled traffic data, processing ends.

At step 225, headers of the received packet are stripped, isolating, in the sampled traffic data, the payload data from the sampled packet. For example, using the sFlow network management protocol, the received packet may be a sFlow packet, which includes Ethernet headers, TCP/IP headers, UDP headers, and a sFlow datagram. The sFlow datagram includes a header portion and a packet data portion. The packet data portion of the sFlow datagram includes a number of sFlow samples. Each sFlow sample includes a header portion and a data portion. The data portion of the sFlow sample includes payload data from the network packet that was sampled (i.e., sampled packet) by a sampling agent. All headers may be discarded, thereby isolating the payload data of the sampled packet.

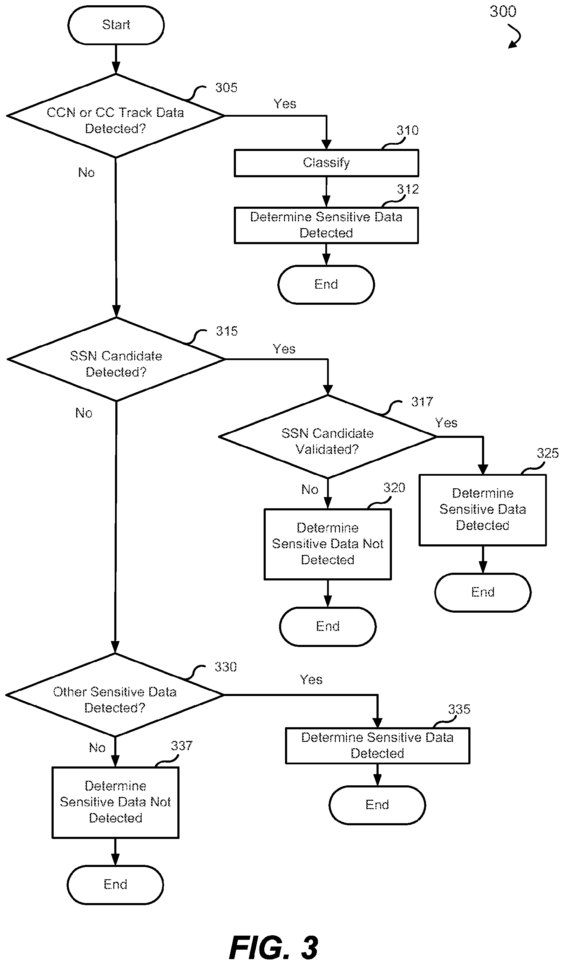

The payload data in the sampled traffic data is analyzed, at step 230. In particular, content of the isolated payload data of the sampled packet, as included in the sampled traffic data, is analyzed. Unlike flow-based techniques for detecting data leaks, an analysis of the content in the sampled traffic data is relied upon for detecting suspected data loss. As previously described, a payload portion of the sampled packet data contains headers and a payload of the sampled network packet. It is the payload of the sampled network packet (as contained in the sampled traffic data) that is processed via, for example, deep packet inspection techniques. Processing is further described with respect to FIG. 3.

The decoded strings that make up the payload of the sampled network packet (as contained in the sampled traffic data) may be provided to an inspection module, such as an inspection plug-in, which identifies sensitive data in the network based on a detection policy.

A detection policy for credit card matching recognizes that major credit card companies use standard numbering sequences that are unique to each brand of card, such as Visa, MasterCard, or Discover. The detection policy may detect a matching number pattern of one of these credit card companies using regular expressions or other techniques. Moreover, the Luhn algorithm, which is a checksum, may be used to validate the credit card number or other identification numbers, such as Internal Mobile Equipment Identity (IMEI) numbers, National Provider Identifier numbers, Canadian Social Insurance Numbers, etc.

A detection policy for Social Security Number matching may use regular expressions that identify Social Security numbers contained in files and other data. Furthermore, policies that focus on detection of healthcare information and financial information may employ similar regular expression matching techniques, as is well known by those skilled in the art. Other techniques of detection, such as digital fingerprints (e.g., hashes such as Secure Hash Algorithm 1 and Secure Hash Algorithm 2), may be employed as well.

At step 235, it is determined whether sensitive data is detected. If sensitive data is not detected, processing ends. On the other hand, if sensitive data is indeed detected, processing continues to step 240, where a remedial action is performed in response to the detection. Remedial actions may be performed by the networked device, data loss detector, or another entity, such as the network management server. In one embodiment, where an explicit pattern is matched, an event may be triggered and an alert is generated. The alert may cause a remedial action to take place. For example, the alert may be sent to a network management server, which then performs the remedial action.

Remedial actions may take a plurality of forms, such as terminating or modifying an ongoing process, executing a program or application to remediate against a threat or violation, recording data about the suspected data loss in an event table, terminating the connection, blocking on a switch a port where the data originated from, or the like. Another remedial action may include notifying a network administrator, a syslog server, event collector, or a network management server of a suspected data loss. In response to the notification, additional remedial actions may be taken by one or more of these entities.

As events which indicate suspected data loss are detected (e.g., detecting sensitive data), those events may be logged and tracked, for example in event table(s). In one embodiment, unique events are logged and related events are not tracked. An event may be deemed to be related (e.g., a duplicate event, otherwise sharing a common attribute) to another event based on a configurable logging policy. For example, one logging policy dictates that leaks involving the same type of card (e.g., Visa, MasterCard, American Express, etc.) and/or the same card number detected at or near the same time, are related. Where related events are detected, a single event is logged representing all of the related or duplicate events. The elimination of duplicate and/or related events minimizes overloading a network administrator, or system that performs further remedial action, with a massive amount of alerts.

Each record of a unique event may be reported for additional remedial action. For example, a warning, alert, or other message is provided to the network management server for automatic action to block the data loss threat in the manner prescribed by a configuration file that is specific for an event.

Efficient logging and lookup of these events may be implemented using a multilevel hash table, which may be implemented as multiple hash tables. For example, logging may be implemented using a source address hash, followed by a destination address hash, followed by a leakage type hash, followed by a payload hash. At a first level, one hash table uses the source IP address of the sampled network packet that contains the suspected leak as the first-level key. At a second level, another hash table uses the destination IP address of the sampled network packet as the second-level key. A third level uses a leakage type as the third-level key. As used herein, the leakage type is a value representing the type of leak suspected (e.g., MasterCard, JCB card, Visa, American Express, social security number, etc.), and the payload is the list of information (e.g., a credit card number, a social security number, a password, etc.) that is suspected as being leaked for a given leakage type.

Each record in the hash table includes a listing or another hash table (e.g., destination address) identifying the protocol(s) used in the sampled network packet that contains the suspected leak (e.g., TCP, UDP, ICMP, etc.), and a listing or another hash table containing the sensitive data that is suspected of being leaked (e.g., the credit card number, the personal identification number, etc.). The sensitive data is provided, for example, to allow the network administrator to confirm the accuracy of the leakage report and take action to resolve the potential leakage before the information falls into the hands of unauthorized entities.

**FIG. 3** is a process flow diagram 300 for processing traffic samples in accordance with an embodiment of the invention. The depicted process flow 300 may be carried out by execution of one or more sequences of executable instructions. In another embodiment, the process flow 300 is carried out by components of a data loss detector, an inspection module, an arrangement of hardware logic, e.g., an Application-Specific Integrated Circuit (ASIC), etc.

At step 305, it is determined whether a credit card number (CCN) or credit card (CC) track data is detected in the sampled traffic data, for example by detecting a matching number pattern of a credit card company using regular expressions and other techniques. As used herein, CC track data includes customer name, credit card number, expiration date, card security code, the PIN number in the case of a debit card, and other information as is typically encoded within a magnetic strip on the back of a card. Validation of the CCN and/or CC track data may be performed as previously described, for example, using the Luhn algorithm followed by a small regular expression to determine the type of card, if any.

Where a CCN or CC track data is detected, classification of the CCN and/or CC track data is performed at step 310. The type of card (e.g., Visa, MasterCard, American Express, etc.) may be identified. This classification data may be used, for example, during a process whereby events are logged in a multilevel hash table. At step 312, it is determined that sensitive data is detected.

If a credit card number or credit card track data is not detected at step 305, processing continues to step 315 where it is determined whether a social security number (SSN) candidate is detected in the sampled traffic data, for example by detecting a matching number pattern using regular expressions and other techniques. For example, the detection of candidate SSNs at this stage distinguishes between different types of personally identifiable information, financial data, and personal health information, such as distinguishing a nine digit SSN from a nine-digit PIN.

Once the SSN candidate is detected, validation is performed at step 317. In particular, the structure of the candidate SSN is validated, using a list of valid and/or invalid codes which is maintained by the data loss detector, data collector, or network management server.

First, the list of valid and/or invalid codes is generated. The codes indicate valid social security codes. This information may be provided by a government agency or other entity authorized to issue social security numbers. In particular, the Social Security Administration maintains a publically-accessible website that provides up-to-date information. The initial valid and/or valid list may be generated by referencing the information provided by the authorizing entity.

Second, the list of valid and/or invalid codes is automatically updated to reflect the most recent information provided by the authorized entity. Periodically (e.g., monthly, weekly, daily, hourly, etc) a connection is made by the data loss detector, data collector, or network management server and the website of the Social Security Administration is accessed. The website includes a listing by year and by month of the most recent social security validation data.

it is determined whether the list of valid and/or invalid codes includes the most recent information, for example, by determining whether the website lists the current (today's) month on the website for the current year. If the current month is not present on the list, no update is performed as yet. If the current month is present, a file corresponding to the current month is fetched and parsed, for example, into columns, each column representing one of an area number and group number.

If there is an area and/or group number in the fetched file that is not present in the list, those are added. Additional processing may be performed to determine invalid codes based on the information in the fetched file.

As previously mentioned, the structure of the candidate SSN is validated. The first three digits of the nine digit U.S. SSN make up an area number. In general, an area number is assigned by geographic location. These first three digits of the candidate SSN are compared against area numbers in the list of valid codes and/or invalid codes.

Validation may also be performed on the middle two digits of the SSN candidate. The middle two digits indicate a group number. Typically, a set of group numbers corresponds to each area number allocated to a geographic location. These middle two digits are compared against middle digits in the list of valid and/or invalid codes. Any SSN candidate containing area numbers and group numbers other than those found in the list may be deemed invalid.

Furthermore, validation may also be performed on the last four digits of the SSN candidate. Typically, the last four digits comprise the serial number, which are assigned in increasing order within each area and group combination. A SSN issuance list may be provided periodically (e.g., monthly) by the government agency website. A process may access this information provided by the government agency website, update the valid/invalid list, and based on this information, it may be determined whether the last four digits of the SSN candidate are valid.

The group codes and serial numbers may be updated frequently (i.e., monthly) by government agencies. The timing and frequency of the access to the government agency website and update may correspond to the timing of updates provided by the government agency.

Other methods of SSN validation may be performed, If the SSN candidate is not validated, it is determined that sensitive data is not detected, at step 320. Otherwise, if the SSN candidate is validated, it is determined that sensitive data is detected, at step 325.

Where an SSN candidate is not detected at step 315, it is determined whether other sensitive data is detected at step 330. Known methods of sensitive data detection may be performed. If not found in the sampled traffic data, it is determined that sensitive data is not detected, at step 337. Otherwise, it is determined that sensitive data is detected, at step 335.

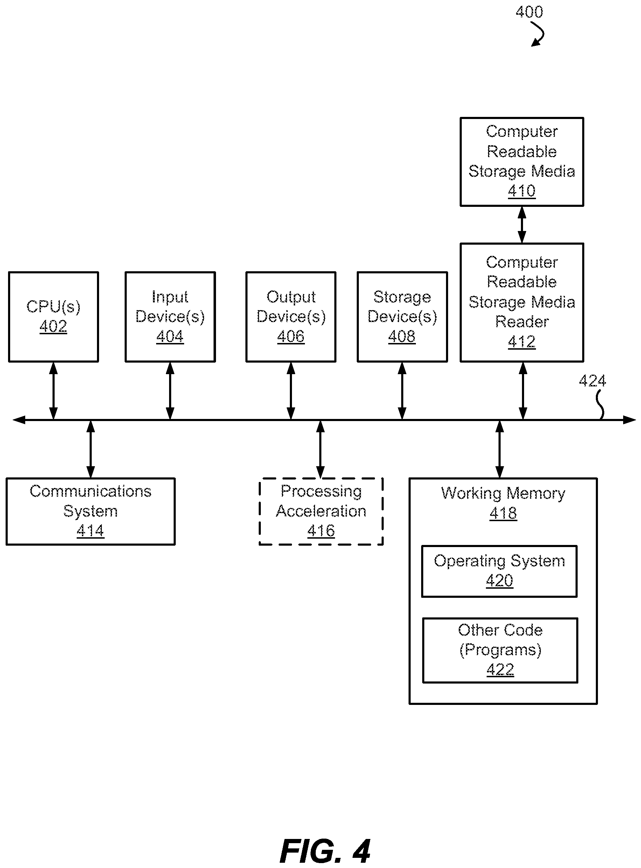

**FIG. 4** illustrates a computer system in which an embodiment of the present invention may be implemented. The system 400 may be used to implement any of the computer systems described above. The computer system 400 is shown comprising hardware elements that may be electrically coupled via a bus 424. The hardware elements may include one or more central processing units (CPUs) 402, one or more input devices 404 (e.g., a mouse, a keyboard, etc.), and one or more output devices 406 (e.g., a display device, a printer, etc.). The computer system 400 may also include one or more storage devices 408. By way of example, the storage device(s) 408 can include devices such as disk drives, optical storage devices, solid-state storage device such as a random access memory ("RAM") and/or a read-only memory ("ROM"), which can be programmable, flash-updateable and/or the like.

The computer system 400 may additionally include a computer-readable storage media reader 412, a communications system 414 (e.g., a modem, a network card (wireless or wired), an infra-red communication device, etc.), and working memory 418, which may include RAM and ROM devices as described above. In some embodiments, the computer system 400 may also include a processing acceleration unit 416, which can include a digital signal processor (DSP), a special-purpose processor, and/or the like.

The computer-readable storage media reader 412 can further be connected to a computer-readable storage medium 410, together (and in combination with storage device(s) 408 in one embodiment) comprehensively representing remote, local, fixed, and/or removable storage devices plus storage media for temporarily and/or more permanently containing, storing, transmitting, and retrieving computer-readable information. The communications system 414 may permit data to be exchanged with the network and/or any other computer described above with respect to the system 400.

The computer system 400 may also comprise software elements, shown as being currently located within a working memory 418, including an operating system 420 and/or other code 422, such as an application program (which may be a client application, Web browser, mid-tier application, RDBMS, etc.). It should be appreciated that alternate embodiments of a computer system 400 may have numerous variations from that described above. For example, customized hardware might also be used and/or particular elements might be implemented in hardware, software (including portable software, such as applets), or both. Further, connection to other computing devices such as network input/output devices may be employed.

The specification and drawings are, accordingly, to be regarded in an illustrative rather than a restrictive sense. It will, however, be evident that various modifications and changes may be made thereunto without departing from the scope of the invention as set forth in the claims.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of detecting suspected data leakage in a network (100) including a plurality of networked devices (16, 18, 29, 24, 22), comprising:
receiving Packets from sampling agents of each of the plurality of networked devices (16, 18, 29, 24, 22) ;
determining whether a packet includes sampled traffic data, the sampled traffic data comprising a sample of a packet constituting network traffic through one of the plurality of networked devices (16, 18, 29, 24, 22), the sample including payload data copied from the packet constituting network traffic;
if so, analyzing the payload data of the sampled traffic data;
determining, by a data loss detector (13), whether sensitive data is detected in the payload data of the sampled traffic data based on the analysis; and
performing a remedial action in response to determining that sensitive data is detected.

2. The method of claim 1, wherein analyzing the payload data comprises:
determining whether a credit card number or credit card track data is detected in the payload data; and
determining whether a number comprising a social security candidate is detected in the payload data.

3. The method of claim 2, wherein analyzing the payload data further comprises:
validating the number as a social security number where a social security candidate is detected;
determining sensitive data is detected where the validation is successful; and
determining sensitive data is not detected where the validation is unsuccessful.

4. The method of claim 1, wherein the remedial action comprises generating an alert.

5. The method of claim 1, further comprising logging the detection of sensitive data in an event table.

6. A method according to any of claims 1 , 4 or 5 comprising:
accessing validation data provided by an entity authorized to issue social security numbers;
updating, by a data loss detector, a list of valid social security codes based on the validation data;
wherein the step of analyzing comprises determining whether a number comprising a social security candidate is detected in the payload data;
validating a plurality of digits of the number based on the list of valid social security codes; and
determining sensitive data is detected where the plurality of digits is validated.

7. The method of claim 6, wherein the plurality of digits are comprised of an area number, a group number, and a serial number.

8. A system for detecting suspected data leakage in a network (100) including a plurality of networked devices (16, 18, 29, 24, 22), the system comprising:
a data collector (12) configured to receive a plurality of sampled traffic datagrams from sampling agents of each of the plurality of networked devices (16, 18, 29, 24, 22), a sampled traffic datagram comprising a copied sample of a packet constituting network traffic through one of the plurality of networked devices (16, 18, 29, 24, 22), wherein the sample includes payload data from the packet; and
a data loss detector (13) coupled to the data collector (12), the data loss detector (13) configured to decode each sampled traffic datagram, analyze the payload data of the sampled traffic datagram, and determine whether sensitive data is detected in the payload data of the sampled traffic datagram.

9. The system of claim 8, wherein the data collector (12) is further configured to perform a remedial action in response to determining sensitive data is detected.

10. The system of claim 9, wherein the remedial action comprises generating an alert.

11. The system of claim 8, wherein the data collector (12) is further configured to log a detection of sensitive data in an event table.

12. The system of claim 8, wherein the data loss detector (13) is configured to analyze the payload data by:
determining whether a credit card number or credit card track data is detected in the payload data; and
determining whether a number comprising a social security candidate is detected in the payload data.

## Patentansprüche

1. Verfahren zum Erfassen von vermuteten Datenlecks in einem Netzwerk (100), das mehrere vernetzte Vorrichtungen (16, 18, 29, 24, 22) beinhaltet, wobei das Verfahren Folgendes umfasst:
Empfangen von Paketen von Abtastagenten jeder der mehreren vernetzten Vorrichtungen (16, 18, 29, 24, 22);
Bestimmen, ob ein Paket abgetastete Verkehrsdaten beinhaltet, wobei die abgetasteten Verkehrsdaten eine Abtastung eines Pakets umfassen, das einen Netzwerkverkehr durch eine der mehreren vernetzten Vorrichtungen (16, 18, 29, 24, 22) bildet, wobei die Abtastung Nutzlastdaten beinhaltet, die aus dem Paket kopiert werden, das den Netzwerkverkehr bildet;
wenn dies der Fall ist, Analysieren der Nutzlastdaten der abgetasteten Verkehrsdaten;
Bestimmen durch einen Datenverlustdetektor (13), ob sensible Daten in den Nutzlastdaten der abgetasteten Verkehrsdaten basierend auf der Analyse erfasst werden; und
Ausführen einer Korrekturmaßnahme als Reaktion auf das Bestimmen, dass sensible Daten erfasst werden.

2. Verfahren nach Anspruch 1, wobei das Analysieren der Nutzlastdaten Folgendes umfasst:
Bestimmen, ob eine Kreditkartennummer oder Kreditkartennachverfolgungsdaten in den Nutzlastdaten erfasst werden; und
Bestimmen, ob eine Nummer, die einen Sozialversicherungskandidaten umfasst, in den Nutzlastdaten erfasst wird.

3. Verfahren nach Anspruch 2, wobei das Analysieren der Nutzlastdaten ferner Folgendes umfasst:
Validieren der Nummer als eine Sozialversicherungsnummer, wenn ein Sozialversicherungskandidat erfasst wird;
wobei das Bestimmen sensibler Daten erfasst wird, wenn die Validierung erfolgreich ist; und
das Bestimmen sensibler Daten nicht erfasst wird, wenn die Validierung erfolglos ist.

4. Verfahren nach Anspruch 1, wobei die Abhilfemaßnahme das Erzeugen einer Warnung umfasst.

5. Verfahren nach Anspruch 1, das ferner das Protokollieren der Erfassung von empfindlichen Daten in einer Ereignistabelle umfasst.

6. Verfahren nach einem der Ansprüche 1, 4 oder 5, das Folgendes umfasst:
Zugreifen auf Validierungsdaten, die von einer zur Vergabe von Sozialversicherungsnummern berechtigten Dateneinheit bereitgestellt werden;
Aktualisieren einer Liste gültiger Sozialversicherungscodes basierend auf den Validierungsdaten durch eine Datenverlusterfassungseinrichtung;
wobei der Schritt des Analysierens das Bestimmen umfasst, ob eine Nummer, die einen Sozialversicherungskandidaten umfasst, in den Nutzlastdaten erfasst wird;
Validieren mehrerer Ziffern der Nummer basierend auf der Liste der gültigen Sozialversicherungscodes; und
das Bestimmen sensibler Daten erfasst wird, wenn die mehreren Ziffern validiert werden.

7. Verfahren nach Anspruch 6, wobei die mehreren Ziffern aus einer Bereichsnummer, einer Gruppennummer und einer Seriennummer bestehen.

8. System zum Erfassen von vermuteten Datenlecks in einem Netzwerk (100), das mehrere vernetzte Vorrichtungen (16, 18, 29, 24, 22) beinhaltet, wobei das System Folgendes umfasst:
einen Datensammler (12), der konfiguriert ist, um mehrere abgetastete Verkehrsdatagramme von Abtastagenten jeder der mehreren Netzwerkvorrichtungen (16, 18, 29, 24, 22) zu empfangen, wobei ein abgetastetes Verkehrsdatagramm eine kopierte Abtastung eines Pakets umfasst, das einen Netzwerkverkehr durch eine der mehreren Netzwerkvorrichtungen (16, 18, 29, 24, 22) bildet, wobei die Abtastung Nutzlastdaten aus dem Paket beinhaltet; und
eine Datenverlusterfassungseinrichtung (13), die mit dem Datensammler (12) gekoppelt ist, wobei die Datenverlusterfassungseinrichtung (13) konfiguriert ist, um jedes abgetastete Verkehrsdatagramm zu dekodieren, die Nutzlastdaten des abgetasteten Verkehrsdatagramms zu analysieren und zu bestimmen, ob sensible Daten in den Nutzlastdaten des abgetasteten Verkehrsdatagramms erfasst werden.

9. System nach Anspruch 8, wobei der Datensammler (12) ferner konfiguriert ist, um eine Abhilfemaßnahme als Reaktion auf das Bestimmen, dass sensible Daten erfasst werden, auszuführen.

10. System nach Anspruch 9, wobei die Abhilfemaßnahme das Erzeugen einer Warnung umfasst.

11. System nach Anspruch 8, wobei der Datensammler (12) ferner konfiguriert ist, um eine Erfassung sensibler Daten in einer Ereignistabelle zu protokollieren.

12. System nach Anspruch 8, wobei die Datenverlusterfassungseinrichtung (13) konfiguriert ist, um die Nutzlastdaten durch Folgendes zu analysieren:
Bestimmen, ob eine Kreditkartennummer oder Kreditkartennachverfolgungsdaten in den Nutzlastdaten erfasst werden; und
Bestimmen, ob eine Nummer, die einen Sozialversicherungskandidaten umfasst, in den Nutzlastdaten erfasst wird.

## Revendications

1. Un procédé de détection d'une fuite de données suspectée dans un réseau (100) comprenant une pluralité de dispositifs en réseau (16, 18, 29, 24, 22), consistant à :
recevoir des paquets provenant d'agents d'échantillonnage de chacun de la pluralité de dispositifs en réseau (16, 18, 29, 24, 22) ;
déterminer si un paquet comprend des données de trafic échantillonnées, les données de trafic échantillonnées comprenant un échantillon d'un paquet constituant du trafic sur le réseau à travers l'un de la pluralité de dispositifs en réseau (16, 18, 29, 24, 22), l'échantillon comprenant des données de charge utile copiées à partir du paquet constituant du trafic sur le réseau ;
le cas échéant, analyser des données de charge utile des données de trafic échantillonnées ;
déterminer, par un détecteur de perte de données (13), si des données sensibles sont détectées dans les données de charge utile des données de trafic échantillonnées sur la base de l'analyse ; et
exécuter une mesure corrective en réponse à la détermination que des données sensibles sont détectées.

2. Procédé selon la revendication 1, dans lequel l'analyse des données de charge utile consiste à :
déterminer si un numéro de carte de crédit ou des données de suivi de carte de crédit sont détectés dans les données de charge utile ; et
déterminer si un numéro comprenant un numéro de sécurité sociale candidat est détecté dans les données de charge utile.

3. Procédé selon la revendication 2, dans lequel l'analyse des données de charge utile consiste en outre à :
valider le numéro en tant que numéro de sécurité sociale lorsqu'un numéro de sécurité sociale candidat est détecté ;
déterminer que des données sensibles sont détectées lorsque la validation est réussie ; et
déterminer que des données sensibles ne sont pas détectées lorsque la validation n'est pas réussie.

4. Procédé selon la revendication 1, dans lequel la mesure corrective comprend la génération d'une alerte.

5. Procédé selon la revendication 1, comprenant en outre l'enregistrement de la détection de données sensibles dans une table d'événements.

6. Procédé selon l'une quelconque des revendications 1, 4 ou 5 consistant à :
accéder aux données de validation fournies par une entité autorisée à délivrer des numéros de sécurité sociale ;
mettre à jour, par un détecteur de perte de données, d'une liste des codes de sécurité sociale valides sur la base des données de validation ;
dans lequel l'étape d'analyse consiste à déterminer si un numéro comprenant un numéro de sécurité sociale candidat est détecté dans les données de charge utile ;
valider une pluralité de chiffres du numéro sur la base de la liste des codes de sécurité sociale valides ; et
déterminer que des données sensibles sont détectées lorsque la pluralité de chiffres est validée.

7. Procédé selon la revendication 6, dans lequel la pluralité de chiffres est composée d'un numéro de zone, d'un numéro de groupe et d'un numéro de série.

8. Un système pour détecter une fuite de données suspectée dans un réseau (100) comprenant une pluralité de dispositifs en réseau (16, 18, 29, 24, 22), le système comprenant :
un collecteur de données (12) configuré pour recevoir une pluralité de datagrammes de trafic échantillonnés provenant d'agents d'échantillonnage de chacun de la pluralité de dispositifs en réseau (16, 18, 29, 24, 22), un datagramme de trafic échantillonné comprenant un échantillon copié d'un paquet constituant un trafic sur le réseau à travers l'un des dispositifs en réseau (16, 18, 29, 24, 22), l'échantillon incluant des données de charge utile du paquet ; et
un détecteur de perte de données (13) couplé au collecteur de données (12), le détecteur de perte de données (13) étant configuré pour décoder chaque datagramme de trafic échantillonné, analyser les données de charge utile du datagramme de trafic échantillonné, et déterminer si des données sensibles sont détectées dans les données de charge utile du datagramme de trafic échantillonné.

9. Système selon la revendication 8, dans lequel le collecteur de données (12) est en outre configuré pour exécuter une mesure corrective en réponse à la détermination que des données sensibles sont détectées.

10. Système selon la revendication 9, dans lequel la mesure corrective comprend la génération d'une alerte.

11. Système selon la revendication 8, dans lequel le collecteur de données (12) est en outre configuré pour enregistrer une détection de données sensibles dans une table d'événements.

12. Système selon la revendication 8, dans lequel le détecteur de perte de données (13) est configuré pour analyser les données de charge utile en :
déterminant si un numéro de carte de crédit ou des données de suivi de carte de crédit sont détectés dans les données de charge utile ; et
déterminant si un numéro comprenant un numéro de sécurité sociale candidat est détecté dans les données de charge utile.
